# EUROPEAN PATENT APPLICATION

(11) **EP 4 390 660 A1**
(43) Date of publication of application: **26.06.2024**
(21) Application number: 22913504.1
(22) Date of filing: 13.09.2022
(51) Int. Cl.: G06F 7/483

(54) **MULTI-INPUT FLOATING POINT NUMBER PROCESSING METHOD AND APPARATUS, PROCESSOR AND COMPUTER DEVICE**

(30) Priority: 29.12.2021 CN 202111634856
(71) Applicant: Tencent Technology (Shenzhen) Company Limited, Shenzhen, Guangdong 518057 (CN)
(72) Inventor: REN, Zimu, Shenzhen, Guangdong 518057 (CN); LI, Dongsheng, Shenzhen, Guangdong 518057 (CN)
(74) Representative: EP&C
(86) International application number: PCT/CN2022/118519
(87) International publication number: WO 2023/124235

(57) **Abstract**

A multi-input floating point number processing method executed by a computer device, the method comprising: obtaining a plurality of floating point numbers to be processed corresponding to a target task, and respectively extracting an exponent value of an exponential part and a mantissa value of a mantissa part in each floating point number (S102); sorting the plurality of floating point numbers according to the exponent value of each floating point number to obtain a sorting result, and on the basis of the sorting result, respectively allocating to each floating point number a shifter from a plurality of shifters having different preset digits (S104); for each floating point number, performing shift processing on the mantissa value of the corresponding floating point number by means of the shifter allocated to the floating point number to obtain a shift result (S106);and on the basis of each shift result, determining a floating point number processing result corresponding to the target task (S 108).

## Description

### RELATED APPLICATION

This disclosure claims priority to Chinese Patent Application No. 2021116348560, filed with the China Patent Office on December 29, 2021 and entitled "MULTIPLE-INPUT FLOATING-POINT NUMBER PROCESSING METHOD AND APPARATUS, PROCESSOR AND COMPUTER DEVICE".

### FIELD OF THE TECHNOLOGY

This disclosure relates to the technical field of data processing, in particular to a multiple-input floating-point number processing method and apparatus, a processor, a computer device and a storage medium.

### BACKGROUND OF THE DISCLOSURE

With development of a computer technology, an artificial intelligence (AI) technology is also rapidly developing. In the technical field of AI, an AI algorithm is typically implemented through an AI processor. In the AI processor, a matrix operation unit is a core data processing device, and performance and computational power of the matrix operation unit directly determine the performance of the AI processor. In the matrix operation unit, a multiple-input floating-point operation unit is a key to determine the performance.

For a multiple-input floating-point operation mode in a conventional solution, a shifted data bit width will be very wide to realize a purpose that there is no intermediate precision loss. Therefore, a plurality of shifters with high bits are usually required to ensure that there is no intermediate precision loss. An excessive shift range causes significant hardware overhead, resulting in the processor needing to occupy more hardware resources.

### SUMMARY

Various embodiments of this disclosure provide a multiple-input floating-point number processing method and apparatus, a processor, a computer device and a storage medium.

According to various embodiments of this disclosure, a multiple-input floating-point number processing method is provided. The method includes the following steps:
acquiring a plurality of floating-point numbers corresponding to a target task, each of the plurality of the floating-point numbers comprising an exponent part and a mantissa part;
for each of the floating-point numbers, extracting an exponential value of the respective exponent part and a mantissa value of the respective mantissa part;
sorting, according to a magnitude of the exponential value of each of the plurality of floating-point numbers, the plurality of floating-point numbers to obtain a sorting result;
for the each floating-point number,
   allocating, based on the sorting result, a shifter from a plurality of shifters with different preset numbers of bits ;
   shifting the mantissa value of the respective floating-point number through the allocated shifter to obtain a shift result; and
processing, based on the shift result of the each of the plurality of the floating-point numbers, the plurality of floating-point numbers to obtain a floating-point number processing result corresponding to the target task.

According to various embodiments of this disclosure, a multiple-input floating-point number processing apparatus is provided. The apparatus includes:
an acquiring module, configured to acquire a plurality of floating-point numbers corresponding to a target task, each of the plurality of the floating-point numbers comprising an exponent part and a mantissa part; for each of the floating-point numbers, extract an exponential value of the respective exponent part and a mantissa value of the respective mantissa part;
an allocating module, configured to sort, according to a magnitude of the exponential value of each of the plurality of floating-point numbers, the plurality of floating-point numbers to obtain a sorting result; for the each floating-point number, allocate, based on the sorting result, a shifter from a plurality of shifters with different preset numbers of bits;
a shifting module, configured to for the each floating-point number, shift the mantissa value of the respective floating-point number through the allocated shifter to obtain a shift result; and
a processing module, configured to process, based on the shift result of the each of the plurality of the floating-point numbers, the plurality of floating-point numbers to obtain a floating-point number processing result corresponding to the target task.

According to various embodiments of this disclosure, a processor is provided. The processor includes:
a plurality of shifters with different preset numbers of bits, a shifter being allocated to each of a plurality of floating-point numbers, based on a sorting result, for shifting a mantissa value of the respective floating-point number through to obtain a shift result, the plurality of floating-point numbers being sorted according to a magnitude of an exponential value of each of the plurality of floating-point numbers to obtain the sorting result; and
a logic processing unit, configured to process, based on the shift result of the each of the plurality of the floating-point numbers, the plurality of floating-point numbers to obtain a floating-point number processing result corresponding to the target task.

According to various embodiments of this disclosure, a computer device is provided. The computer device includes a memory and a processor, the memory storing a computer readable instruction, and the processor, when executing the computer readable instruction, implementing steps of the multiple-input floating-point number processing method above.

According to various embodiments of this disclosure, a computer readable storage medium is provided. The computer readable storage medium stores a computer program, the computer program, when executed by a processor, implementing steps of the multiple-input floating-point number processing method above.

According to various embodiments of this disclosure, a computer program product is provided. The computer program product includes a computer program, the computer program, when executed by a processor, implementing steps of the multiple-input floating-point number processing method above.

Details of one or more embodiments of this disclosure are provided in the accompanying drawings and descriptions below. Other features, objectives, and advantages of this disclosure become apparent from the specification, the accompanying drawings, and the claims.

### BRIEF DESCRIPTION OF THE DRAWINGS

FIG. 1 is a schematic flowchart of a multiple-input floating-point number processing method in one or more embodiments.
FIG. 2 is a schematic diagram of a format of a floating-point number in one or more embodiments.
FIG. 3 is a schematic flowchart of a step of allocating a shifter in one or more embodiments.
FIG. 4 is a schematic flowchart of a step of shift processing in one or more embodiments.
FIG. 5 is a schematic flowchart of a step of shift processing in another one or more embodiments.
FIG. 6 is a schematic flowchart of a step of determining a floating-point number processing result corresponding to a target task based on each shift result in one or more embodiments.
FIG. 7 is a schematic flowchart of a step of segmented compression processing in one or more embodiments.
FIG. 8 is a schematic diagram of a principle of segmented compression processing in one or more embodiments.
FIG. 9 is a schematic flowchart of determining a floating-point number processing result corresponding to a target task based on a plurality of segmented compression results in one or more embodiments.
FIG. 10 is a schematic flowchart of a step of outputting a selection result by a selector in one or more embodiments.
FIG. 11 is a schematic flowchart of a step of performing normalization processing on a floating-point number processing result in one or more embodiments.
FIG. 12 is a schematic flowchart of existing multiple floating-point number addition calculation in one or more embodiments.
FIG. 13 is a schematic diagram of composition of a data bit width in one or more embodiments.
FIG. 14 is a schematic flowchart of this disclosure to multiple floating-point number addition calculation in one or more embodiments.
FIG. 15 is a structural block diagram of a multiple-input floating-point number processing apparatus in one or more embodiments.
FIG. 16 is a structural block diagram of a processor in one or more embodiments.
FIG. 17 is a structural block diagram of a logic processing unit in one or more embodiments.
FIG. 18 is a diagram of an internal structure of a computer device in one or more embodiments.

In order to better describe and illustrate the embodiments and/or examples of the inventions disclosed here, reference may be made to one or more accompanying drawings. The additional details or examples used for describing the accompanying drawings are not to be considered as limiting the scope of any of the disclosed invention, the currently described embodiments and/or examples, and best modes of these inventions understood currently.

### DESCRIPTION OF EMBODIMENTS

To make objectives, technical solutions, and advantages of this disclosure clearer, the following further describes this disclosure in detail with reference to the accompanying drawings and the embodiments. It is to be understood that the specific embodiments described here are only used for explaining this disclosure, and are not used for limiting this disclosure.

This disclosure provides a multiple-input floating-point number processing method and apparatus, a processor, a computer device, a storage medium and a computer program product. By optimizing an operation mode of a floating-point number and a corresponding processing logic, not only the operation of the plurality of floating-point numbers can be efficiently processed, but also an area of an AI processor can be effectively reduced by reducing an area of a shifter, a critical path in timing is reduced, and a master frequency of the AI processor is improved, so that a single chip applying the AI processor may provide higher computational power.

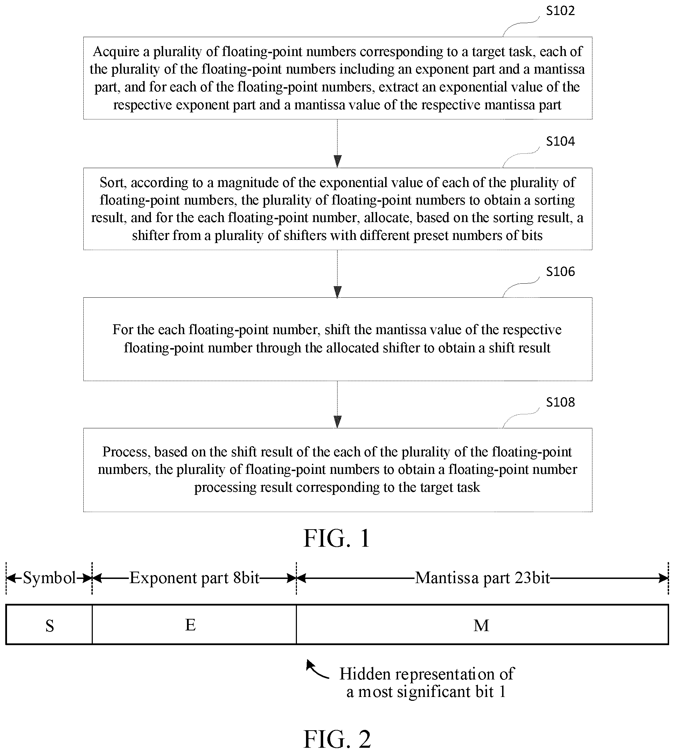

In some embodiments, as shown in FIG. 1, a multiple-input floating-point number processing method is provided. This embodiment takes an example of the disclosure of this method to a computer device for illustration. It may be understood that the computer device may be a terminal or a server. The server may be an independent physical server, or a server cluster or distributed system composed of the plurality of physical servers, or a cloud server that provides a cloud computing service. The terminal may be, but is not limited to, one or more of various personal computers, notebook computers, smartphones, tablet computers, IoT devices, portable wearable devices and the like. The IoT device may be one or more of a smart speaker, a smart television, a smart air conditioner, a smart vehicle-mounted device and the like. The portable wearable device may be one or more of a smart watch, a smart wristband, a headset device, and the like. Exemplarily, the multiple-input floating-point number processing method provided in this embodiment of this disclosure may be applied to a data processing device in the computer device, such as a processor and a sensor.

In this embodiment, the method includes the following steps:
step S102: Acquire a plurality of floating-point numbers corresponding to a target task, each of the plurality of the floating-point numbers including an exponent part and a mantissa part, and for each of the floating-point numbers, extract an exponential value of the respective exponent part and a mantissa value of the respective mantissa part.

In the embodiments of the present disclosure including the embodiments of both the claims and the specification (hereinafter referred to as "all embodiments of the present disclosure"), the target task may preferably refer to a computational processing task executed by the computer device to achieve a certain goal. Computational processing includes, but is not limited to, mathematical operations such as addition, subtraction, multiplication or division. For example, the target task may be a computational processing task in a neural network training process, and includes, but is not limited to, a convolutional summation task or a similarity computational task. For another example, the target task may also be a cloud computing or distributed computing task, used for computing a plurality of pieces of data.

In the embodiments of the present disclosure including the embodiments of both the claims and the specification (hereinafter referred to as "all embodiments of the present disclosure"), the floating-point number is preferably digital representation of a number belonging to a specific subset of rational numbers, and is used for approximate representation of any real number in a computer. Taking a current common floating-point number format as an example, the format of the floating-point number generally follows an IEEE binary floating-point number arithmetic standard (ANSI/IEEE Std 754-1985, usually referred to as IEEE 754) formulated by a microprocessor standards committee (MSC).

The IEEE 754 standard specifies a specific standard for storing a decimal floating-point number in a binary form in a computer memory, and formulates four ways to represent a floating-point number value: a single-precision floating-point number, a double-precision floating-point number, an extended single-precision floating-point number, and an extended double-precision floating-point number.

As shown in FIG. 2, IEEE 754 represents the floating-point number as a symbol, an exponent part, and a mantissa part. A symbol S occupies a most significant bit, and is used for representing that the floating-point number is a positive number or a negative number; "0" represents that the floating-point number is a positive number, and "1" represents that the floating-point number is a negative number. An exponential value E (usually also called a level code) in the exponent part is represented by an offset code (also called a biased exponent or a biasing code). Taking a 32-bit single-precision floating-point number as an example, a range of the exponential value E is 8bit, representing 0-255 exponential values. The exponential value is used for indicating a location of a decimal point. A mantissa value M of the mantissa part of the floating-point number is represented by a source code. Similarly, taking a 32-bit single-precision floating-point number as an example, a range of the mantissa value M is 24-bit, which determines precision of the real number that can be represented by the floating-point number. Due to the fact that a most significant bit of the source code must be a significant bit (i.e. must be 1), the most significant bit of the mantissa part is usually omitted (or hidden) in the computer memory to save a storage space. Therefore, 24-bit information may be represented by the mantissa part of 23bit in the figure.

For simplicity and ease of understanding in description, the examples listed in the following embodiments comply with the IEEE 754 standard, but are not to be understood as limiting the scope of the embodiments of this disclosure.

In some embodiments, the plurality of floating-point numbers are stored in a memory. The memory may be an internal memory set in the computer device, or an external memory that is independent of the computer device and is in communication connection with the computer device.

Specifically, the computer device acquires two or more floating-point numbers from the memory, and extracts the exponential value of the exponent part and the mantissa value of the mantissa part of each floating-point number according to the format followed by the floating-point number. The exponential value is used for subsequent sorting of the floating-point numbers to determine the magnitude of the shifter allocated for each floating-point number; and the mantissa value is a part used for specific shift processing.

Then taking the 32-bit single-precision floating-point number as an example, the computer device extracts a numerical value corresponding to a 31^{st} bit (the most significant bit) as a value of a sign bit, extracts numerical values corresponding to a 30^{th} bit to a 23^{rd} bit as the exponential value of the exponent part, and extracts numerical values corresponding to a 22^{nd} bit to a 0 bit (the least significant bit) as the mantissa value of the mantissa part. As mentioned earlier, the computer device uses a representation of a most significant bit 1 of an implicit mantissa part to represent the mantissa value, so the bit extracted by the computer device is from the 22^{nd} bit to the 0 bit.

Step S 104: Sort, according to a magnitude of the exponential value of each of the plurality of floating-point numbers, the plurality of floating-point numbers to obtain a sorting result, and for the each floating-point number, allocate, based on the sorting result, a shifter from a plurality of shifters with different preset numbers of bits.

Because the exponential values of all the floating-point numbers are different, a dimension of each floating-point number may not be consistent. In order to calculate the floating-point numbers, it is necessary to first unify the different floating-point numbers into the same dimension. Here, shift processing of each floating-point number is realized by setting the plurality of shifters, so that all the floating-point numbers are located in the same dimension. The quantity of the shifters is determined based on the quantity of the floating-point numbers. For example, the quantity of the shifters may be the same as the quantity of the floating-point numbers. For another example, since a floating-point number corresponding to a maximum value of the exponential value does not need to be subjected to shift processing, the quantity of the shifters may be the quantity of the floating-point numbers minus 1, so as to reduce hardware resources required to be consumed.

All the shifters are preset with different number of bits, and the preset number of bits for each shifter is equal to a sum of a maximum range of the mantissa value plus a maximum shiftable range of the shifter during shift processing. For example, the number of bits of a 50-bit shifter is 50, and since the mantissa value is up to 24 bits, the space occupied by the mantissa value is removed, and the maximum shiftable range w of the shifter is 26 bits. In a subsequent shift process, the shifter shifts the mantissa value within its maximum shiftable range.

In order to reduce hardware overhead as much as possible, in some embodiments, the different preset numbers of bits of the plurality of shifters are all within a first preset range, and the preset numbers of bits of all the shifters are uniformly distributed within the first preset range. Specifically, the maximum value of the preset numbers of bits in the plurality of shifters is taken as the first preset range, and the shift ranges of the remaining shifters are all within the first preset range. The preset numbers of bits of all the shifters are uniformly distributed, including gradually increasing or gradually decreasing by a certain multiple, presenting as arithmetic progression or proportional progression. Exemplarily, a shifter with a q (e.g. q=24 bits + w bits, w=26) bits, a shifter with b 2*w bits, a shifter with c 3*w bits, and a shifter with x n*w bits are set in advance, where a value of n is the number of the floating-point numbers minus 1.

For the purpose of differentiation, in all embodiments of this disclosure, the range in which the preset number of bits of the shifter are located is referred to as the first preset range, and a range in which a numeric value of a compression ratio of a compressor is located is referred to as a second preset range. The terms "first" and "second" above are used in this disclosure for describing different numeric value ranges, but these numeric value ranges are not to be limited by these terms. These terms are merely used for distinguishing one numeric value range from another numeric value range. For example, the first preset range may be referred to as the second preset range, and similarly, the second preset range may be referred to as the first preset range without departing from the scope of various described embodiments, but unless the context explicitly indicates otherwise, they do not refer to the same range. Similar situations include a first domain segment, a second domain segment, and a third domain segment, as well as first symbol identification and second symbol identification, as well as a first shift direction and a second shift direction, and so on.

Specifically, after acquiring the exponential value of each floating-point number, the computer device sorts all the floating-point numbers according to the magnitude of the exponential values of all the floating-point numbers to obtain the sorting result. Exemplarily, the computer device sorts all the floating-point numbers in an order of the exponential values from small to large, so as to obtain the sorting result. For another example, the computer device sorts all the floating-point numbers in an order of the exponential values from large to small, so as to obtain the sorting result. Since the floating-point number with the maximum exponential value does not need to be subjected to shift processing, except for the floating-point number with the maximum exponential value, the computer device allocates one shifter to each of the remaining floating-point numbers in turn according to the obtained sorting result of the floating-point numbers.

In the above embodiment, by allocating the different shifters for the different floating-point numbers, compared with a situation in the related art that a plurality of shifters with the same bit are used for shift processing no matter the magnitude of each floating-point number, the hardware overhead is significantly reduced, timing characteristics are good and efficiency is high.

In some other embodiments, the different preset numbers of bits of the plurality of shifters may also be non-uniformly distributed within the first preset range. For example, within the first preset range, a preset number of bits of one shifter is set to be q, and the preset number of bits of the remaining shifters are n*w. For another example, within the first preset range, the preset numbers of bits of all the shifters gradually increase or gradually decrease exponentially. For yet another example, within the first preset range, the preset number of bits of each x shifter is the same, and the overall trend is gradually increasing or gradually decreasing.

Step S106: For the each floating-point number, shift the mantissa value of the respective floating-point number through the allocated shifter to obtain a shift result.

Specifically, for one floating-point number, the computer device shifts the mantissa value of the floating-point number within the preset number of bits of the shifter by using the shifter allocated for the floating-point number to obtain the shift result of the floating-point number. Since the floating-point number with the maximum exponential value does not need to be subjected to shift processing, the computer device shifts the remaining floating-point numbers by using the shifter allocated respectively to obtain the plurality of shift results.

Shift processing refers to shifting the mantissa value by a certain distance towards a certain shift direction. The shift direction includes left shift and right shift. The shifted bit in the shift processing is a difference between the floating-point number and the maximum value of the floating-point number. Exemplarily, for the floating-point number A, the difference between its exponential value and the maximum exponential value is b, and then the computer device shifts the mantissa value of the floating-point number A to the left or right by b bits. The maximum exponential value is the maximum value among the exponential values of the plurality of floating-point numbers.

Step S 108: Process, based on the shift result of the each of the plurality of the floating-point numbers, the plurality of floating-point numbers to obtain a floating-point number processing result corresponding to the target task.

Specifically, after shift is completed, the computer device may perform subsequent processing according to the specific target task. Specifically, according to the respective corresponding shift result of each floating-point number, all the shift results are compressed in turn to obtain a compression result; and the computer device then performs post-processing on the compression result to obtain the floating-point number processing result corresponding to the target task. Post-processing includes standardization processing, rounding processing and the like. For example, post-processing is used for performing normalization processing on the compression result, so that the compression result conforms to a format specified in IEEE 754, and then the final floating-point number processing result is obtained by rounding.

In the above multiple-input floating-point number processing method, the plurality of shifters with different preset numbers of bits are designed in advance. When processing the plurality of floating-point numbers, the plurality of floating-point numbers may be sorted according to the magnitude of the exponential value of each floating-point number, thus the corresponding shifter is allocated for each floating-point number from the plurality of shifters with different preset numbers of bits based on the sorting result, and the shift processing is performed on the plurality of floating-point numbers by using the allocated shifter, so as to obtain the floating-point number processing result corresponding to the target task based on the shift processing result. In this way, an idea of effective shift is introduced to effectively shift the mantissa value with lower sorting, and a shift range of the mantissa value with top sorting is small (even without shifting). Under the premise of ensuring that there is no intermediate precision loss, area overhead of the shifter is greatly reduced, thus saving the hardware overhead of the processor. Under the premise of limited hardware resources, efficiency and accuracy of floating-point number processing can be well considered.

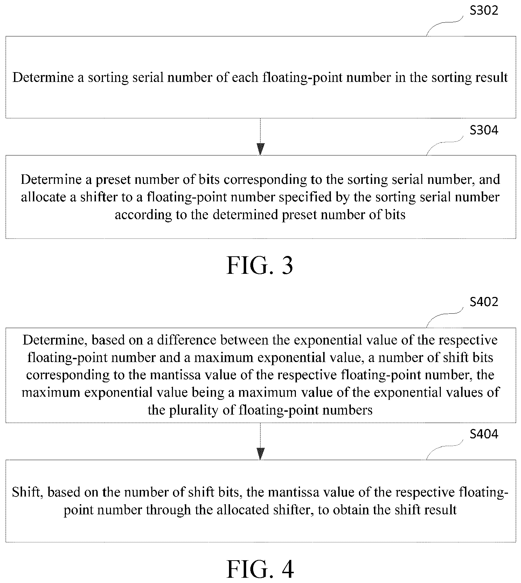

As mentioned above, in some embodiments, the quantity of the plurality of shifters is the same as the quantity of the plurality of floating-point numbers. As shown in FIG. 3, the allocating, based on the sorting result, the shifter for each floating-point number from the plurality of shifters with different preset numbers of bits includes:
Step S302: Determine a sorting serial number of each floating-point number in the sorting result; and
Step S304: Determine a preset number of bits corresponding to the sorting serial number, and allocate a shifter to a floating-point number specified by the sorting serial number according to the determined preset number of bits.

Specifically, the computer device determines the sorting serial number to which each floating-point number belongs according to the sorting result of each floating-point number. The sorting serial number indicates a bit of the floating-point number in the sorting result. Each sorting serial number is preset with the corresponding preset number of bits, for example, a shifter with a first bit corresponding to x, a shifter with a second bit corresponding to y, etc. For one floating-point number, the computer device determines the shifter with the preset number of bits according to the preset number of bits corresponding to the sorting serial number to which the floating-point number belongs, thus determining an association relationship between the floating-point number and the shifter. The computer device may allocate the shifter to process the floating-point number.

Exemplarily, the floating-point number at the first bit in the sorting result does not need to be shifted; for the floating-point number at the second bit, the computer device allocates a q-bit shifter for it; and for the floating-point number at the third bit, the computer device allocates a 2q-bit shifter for it, and so on until all the other floating-point numbers except the floating-point number at the first bit are allocated.

In this embodiment, by allocating the different shifters to the different floating-point numbers, the hardware overhead is significantly reduced, the timing characteristics are good and the efficiency is high.

After allocating the corresponding shifter to each floating-point number, the computer device uses the shifter to shift the floating-point number. In the shift processing process, the bit that the shifter shifts the mantissa value of the floating-point number may be determined according to the difference between its exponential value and the maximum exponential value. For this purpose, in some embodiments, as shown in FIG. 4, the shifting the mantissa value of the respective floating-point number through the allocated shifter to obtain a shift result includes: for the each floating-point number,
Step S402: Determine, based on a difference between the exponential value of the respective floating-point number and a maximum exponential value, a number of shift bits corresponding to the mantissa value of the respective floating-point number, the maximum exponential value being a maximum value of the exponential values of the plurality of floating-point numbers; and
Step S404: Shift, based on the number of shift bits, the mantissa value of the respective floating-point number through the allocated shifter, to obtain the shift result.

Specifically, for one floating-point number, the computer device determines, based on the difference between the exponential value of the floating-point number and the maximum exponential value, the number of shift bits corresponding to the respective mantissa value of each floating-point number, and then performs shift processing by using the shifter allocated to the floating-point number in combination with the number of shift bits. The difference may be a difference value between the exponential value and the maximum exponential value, or a ratio of the exponential value to the maximum exponential value, or a multiple of the difference value between the exponential value and the maximum exponential value.

Exemplarily, if the difference value between the exponential value E₁ of the floating-point number A and the maximum exponential value Eₘₐₓ is x, the computer device determines that the number of shift bits corresponding to the mantissa value M₁ of the floating-point number A is x. After determining the number of shift bits, the computer device shifts the mantissa value of the floating-point number by x bits by using the shifter allocated for the floating-point number to obtain the shift result of the floating-point number. Except for the floating-point number (the floating-point number does not need to be shifted) corresponding to the maximum exponential valueₘₐₓ, the computer device shifts the remaining floating-point numbers to obtain the plurality of shift results.

In this embodiment, by allocating the different shifters for the different floating-point numbers, the hardware overhead is significantly reduced, and shifter resources required by shift processing are saved.

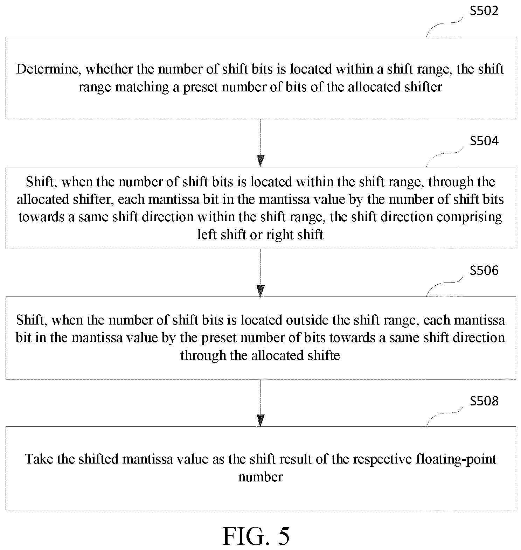

In the shift process, it is possible to encounter a situation where the determined number of shift bits is larger than the preset number of bits of the shifter. Here, in some embodiments, as shown in FIG. 5, the shifting, based on the number of shift bits, the mantissa value of the respective floating-point number through the allocated shifter, to obtain the shift result includes: for the each floating-point number,
Step S502: Determine, whether the number of shift bits is located within a shift range, the shift range matching a preset number of bits of the allocated shifter.

In an example, the preset number of bits of the shifter is equal to a sum of a maximum range of the mantissa value plus the shift range. Hence, the shift range matching the preset number of bits of the shifter means that the shift range is equal to a result of the preset number of bits minus the maximum range of the mantissa value.

Step S504: Shift, when the number of shift bits is located within the shift range, through the allocated shifter, each mantissa bit in the mantissa value by the number of shift bits towards a same shift direction within the shift range, the shift direction comprising left shift or right shift.

Step S506: Shift, when the number of shift bits is located outside the shift range, each mantissa bit in the mantissa value by the preset number of bits towards a same shift direction through the allocated shifter.

Step S508: Take the shifted mantissa value as the shift result of the respective floating-point number.

Specifically, for one floating-point number, the computer device acquires the number of shift bits corresponding to the mantissa value of the floating-point number by executing the above step S502. Meanwhile, the computer device determines the shifter allocated for the floating-point number and acquires the preset number of bits of the shifter. The computer device compares the number of shift bits with the preset number of bits to determine whether the number of shift bits is within the shift range corresponding to the preset number of bits. In the case that the number of shift bits is located within the shift range, the computer device shifts the mantissa value by the number of shift bits towards the shift direction by using the shifter; and in the case that the number of shift bits is located outside the shift range, the computer device shifts the mantissa value by the preset number of bits towards the shift direction by using the shifter. After the computer devices shifts the mantissa value of the floating-point number, the obtained mantissa value is taken as the shift result of the floating-point number. Except for the floating-point number (without needing to be shifted) corresponding to the maximum exponential value, the computer device shifts mentioned above on the remaining floating-point numbers to obtain the plurality of shift results.

Exemplarily, for the floating-point number A, the computer device determines that the number of shift bits corresponding to its mantissa value M₁ is 22, and the preset number of bits of the shifter S_{A} allocated for the floating-point number A is 50, that is, the shift range is 26 bits. Then the computer device judges that the number of shift bits of the floating-point number A is within the shift range of the shifter S_{A}, so the computer device shifts each mantissa bit of the mantissa value of the floating-point number A by 22 bits, for example, 22 bits to the right, towards the same shift direction by using the shifter S_{A}.

For another example, for a floating-point number B, the computer device determines that the number of shift bits corresponding to its mantissa value M₂ is 56, and the preset number of bits of the shifter S_{B} allocated for the floating-point number B is 76, that is, the shift range is 52 bits. Then the computer device judges that the number of shift bits of floating-point number B is outside the shift range of shifter S_{B}. In other words, the number of shift bits of the floating-point number B has exceeded the maximum shift range that shifter S_{B} can shift. Therefore, the computer device shifts each mantissa bit of the mantissa value of the floating-point number B by 52 bits towards the same shift direction by using the shifter S_{B}.

In this embodiment, by allocating the shifters with the different preset numbers of bits to shift the floating-point numbers respectively, it is unnecessary to use a shifter with a larger bit width to ensure that there is no intermediate precision loss, thereby saving the hardware resources of the shifter, and reducing the area overhead of the shifter.

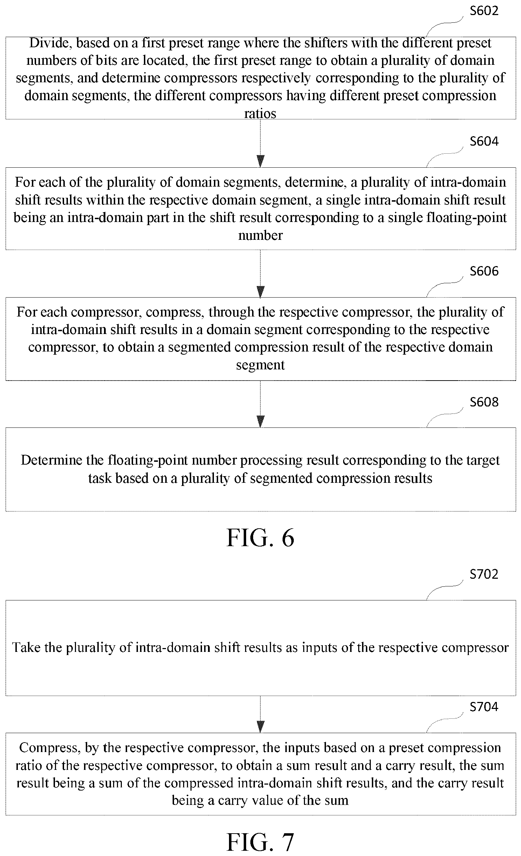

As mentioned above, after determining the shift results of the plurality of floating-point numbers, the computer device further performs compression processing on the floating-point number. In order to reduce an area of the compressor used and reduce a timing path, in some embodiments, as shown in FIG. 6, the determining the floating-point number processing result corresponding to the target task based on each shift result includes:
Step S602: Divide, based on a first preset range where the shifters with the different preset numbers of bits are located, the first preset range to obtain a plurality of domain segments, and determine compressors respectively corresponding to the plurality of domain segments, the different compressors having different preset compression ratios.

The compression ratio refers to a ratio of the quantity of inputs to the quantity of outputs of the compressor. For example, a compressor with a preset compression ratio of (n:2) has n inputs and 2 outputs. For another example, a compressor with a preset compression ratio of (n:3) has n inputs and 3 outputs.

In some embodiments, numeric values of different preset compression ratios possessed by the plurality of compressors are all within a second preset range, and the numeric values of the preset compression ratios of all the compressors are uniformly distributed within the second preset range. The second preset range is obtained based on the quantity of the floating-point numbers. Specifically, the preset compression ratio of the compressor is within the second preset range determined by the range maximum value of (n:2), and the second preset range further includes, for example, (n-1):2, (n-2):2, etc. Where n is the quantity of the floating-point numbers.

Specifically, the computer device divides the first preset range where the shifters with the different preset numbers of bits are located, to obtain the plurality of domain segments. For example, according to the maximum preset number of bits among all the shifters, a range from the most significant bit to the maximum preset number of bits is determined, and the range is equally divided into the plurality of domain segments. The ranges of all the domain segments are equal.

Exemplarily, for a compression process with four floating-point numbers, for the domain segment at the most significant bit, the computer device determines that a compression ratio of a compressor corresponding to the domain segment is 4:2; for a domain segment at the second most significant bit, the computer device determines that a compression ratio of a compressor corresponding to the domain segment is 3:2; and for domain segments at the least significant bit and a second least significant bit, there is no need to allocate the compressor as there is no need for compression. Since the mantissa values in the domain segments at the least significant bit and the second least significant bit does not need to be compressed, the quantity of the compressors is the quantity of the floating-point numbers minus 2.

Step S604: For each of the plurality of domain segments, determine, a plurality of intra-domain shift results within the respective domain segment, a single intra-domain shift result being an intra-domain part in the shift result corresponding to a single floating-point number.

Specifically, for one domain segment, the computer device determines a part within the domain segment whose shift results of all the floating-point numbers are within the domain segment. The part is called the intra-domain part. For example, if the domain segment at the most significant bit is the highest w bits, then within the domain segment, the computer device acquires a value of the highest w bits of the shift result of each floating-point number, and the intra-domain shift results of all the acquired floating-point numbers are the plurality of intra-domain shift results within the domain segment.

Step S606: For each compressor, compress, through the respective compressor, the plurality of intra-domain shift results in a domain segment corresponding to the respective compressor, to obtain a segmented compression result of the respective domain segment.

Specifically, the computer device performs segmented compression processing on the plurality of intra-domain shift results within the divided domain segment by using the compressor allocated for each domain segment to obtain the plurality of segmented compression results.

Exemplarily, for a compression process with n floating-point numbers, for the domain segment at the most significant bit, the computer device performs segmented compression processing by using a compressor with a compression ratio of (n:2); for the domain segment at the second most significant bit, the computer device performs segmented compression processing by using a compressor with a compression ratio of (n-1):2, and so on; and for the domain segments at the least significant bit and the second least significant bit, there is no need to perform compression processing.

Step S608: Determine the floating-point number processing result corresponding to the target task based on a plurality of segmented compression results.

Specifically, the computer device further processes all the segmented compression results based on the segmented compression result corresponding to each domain segment, so as to determine the floating-point number processing result corresponding to the target task. For example, for the plurality of segmented compression results after segmented compression processing, the computer device concatenates all the segmented compression results according to the high and low order of the bits to form a complete compression result, then inputs the compression result to an adder for processing, and finally obtains the floating-point number processing result corresponding to the target task.

In this embodiment, by dividing the plurality of domain segments and performing segmented compression, the compressor at the low-bit domain segment has less input (or even there is no need for compression), greatly reducing the area of the compressor and reducing the timing path.

As shown in FIG. 7, in some embodiments, the compressing, through the respective compressor, the plurality of intra-domain shift results in a domain segment corresponding to the respective compressor, to obtain a segmented compression result of the respective domain segment includes:

Step S702: Take the plurality of intra-domain shift results as inputs of the respective compressor.

Step S704: Compress, by the respective compressor, the inputs based on a preset compression ratio of the respective compressor, to obtain a sum result and a carry result, the sum result being a sum of the compressed intra-domain shift results, and the carry result being a carry value of the sum.

Specifically, for one compressor, the computer device takes the plurality of intra-domain shift results within the domain segment corresponding to the compressor as inputs of the compressor, and then performs segmented compression processing on the plurality of intra-domain shift results within the domain segment according to the preset compression ratio of the compressor to obtain the sum result and the carry result. The sum result is a sum of the compressed intra-domain shift results, and the carry result is a carry value of the sum.

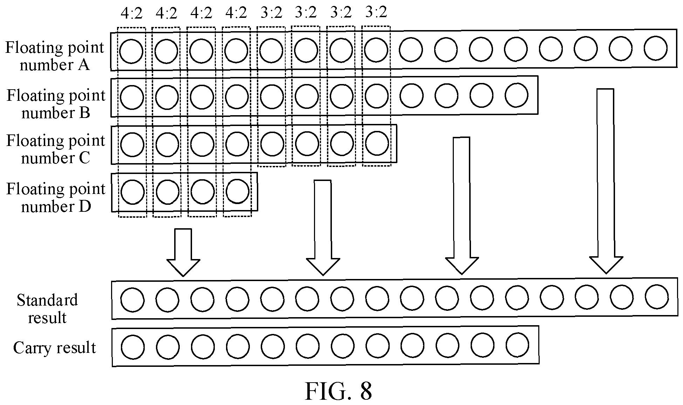

For example, as shown in FIG. 8, taking a compression process of the four floating-point numbers (the floating-point number A, the floating-point number B, a floating-point number C, and a floating-point number D) as an example, for the domain segment at the highest w bits, the computer device performs segmented compression processing on the four intra-domain shift results within the domain segment by using the 4:2 compressor to obtain the sum result and the carry results. When there is a carry in the sum result, the corresponding carry result is 1, otherwise it is 0. For the domain segment at the second highest w bits, the computer device performs segmented compression processing on the three intra-domain shift results within the domain segment by using the 3:2 compressor to obtain the sum result and the carry result. For the domain segments at the least significant bit and the second least significant bit, there is no need to perform compression processing.

In this embodiment, by respectively setting the different compressors for compression according to domain segment division, the area of the compressor is greatly reduced, and the overhead of the hardware resources is reduced.

As mentioned above, the computer device further processes all the segmented compression results after obtaining the segmented compression result corresponding to each domain segment, so as to determine the final floating-point number processing result. In the related art, after compressing to obtain sum (corresponding to the sum result in this embodiment of this disclosure) and carry (corresponding to the carry result in this embodiment of this disclosure), the computer device uses a carry propagate adder (CPA) to perform addition of carry propagation on the sum and the carry so as to obtain the floating-point number processing result.

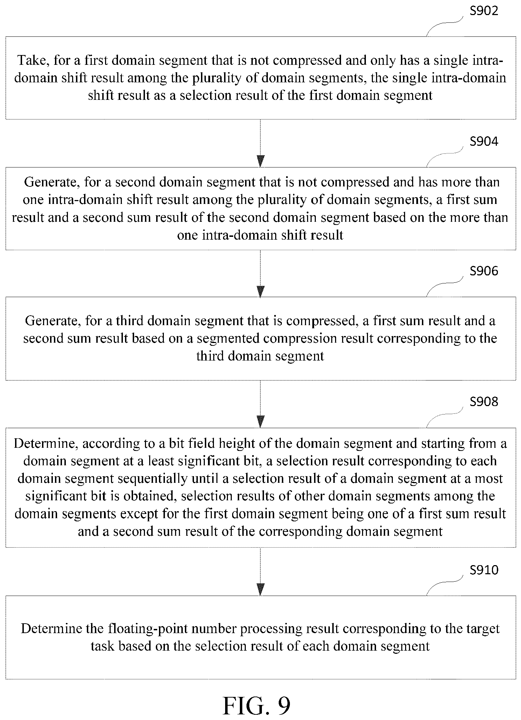

However, the mode adopted in the related art requires to perform addition of carry propagation on two inputs (carry and sum) with full bit width, which requires at least one 128-bit adder, thus occupying a lot of hardware resources and having poor timing. For this purpose, the computer device allocates the different adders for the different domain segments for addition processing respectively; and due to the segmented addition process, it is also necessary to consider the carry situation of each domain segment. Therefore, in order to reduce the occupied hardware resources, in some embodiments, as shown in FIG. 9, the determining the floating-point number processing result corresponding to the target task based on a plurality of segmented compression results includes:
Step S902: Take, for a first domain segment that is not compressed and only has a single intra-domain shift result among the plurality of domain segments, the single intra-domain shift result as a selection result of the first domain segment.
Step S904: Generate, for a second domain segment that is not compressed and has more than one intra-domain shift result among the plurality of domain segments, a first sum result and a second sum result of the second domain segment based on the more than one intra-domain shift result.
Step S906: Generate, for a third domain segment that is compressed, a first sum result and a second sum result based on a segmented compression result corresponding to the third domain segment.
step S908: Determine, according to a bit field height of the domain segment and starting from a domain segment at a least significant bit, a selection result corresponding to each domain segment sequentially until a selection result of a domain segment at a most significant bit is obtained, selection results of other domain segments among the domain segments except for the first domain segment being one of a first sum result and a second sum result of the corresponding domain segment.
Step S910: Determine the floating-point number processing result corresponding to the target task based on the selection result of each domain segment. That is, determine the floating-point number processing result corresponding to the target task based on the selection result of the first domain segment, and the first sum result and the second sum result of other domain segments.

For each domain segment, the computer device first performs addition processing on the segmented compression results in that domain segment respectively to obtain the first sum result and the second sum result. The first sum result is an actual summation result obtained by performing addition processing on the intra-domain shift result, and the second sum result is a simulated summation result obtained by calculation when performing addition processing on the intra-domain shift results and assuming there is the carry. Then, the computer device inputs the first sum result and the second sum result within each domain segment into a selector for selection, and the selector ultimately determines which result to output.

Specifically, if in the plurality of domain segments divided by the computer device, the domain segment at the least significant bit (referred to as the first domain segment) does not need to undergo compression processing, and there is only one intra-domain shift result in the domain segment, the computer device does not need to perform addition processing on the domain segment and does not need to select. The intra-domain shift result may be directly used as a selection result of the first domain segment without allocating the adder and the selector.

The domain segment at the second least significant bit (referred to as the second domain segment) does not need to undergo compression processing as well. There are more than one intra-domain shift result corresponding to the second domain segment, which requires addition processing. Then the computer device performs addition processing on all the intra-domain shift results in the second domain segment, and obtains the first sum result and the second sum result of the second domain segment by calculation.

Except for the domain segment at the least significant bit and the domain segment at the second least significant bit, the intra-domain shift results in all remaining domain segments (referred to as the third domain segment) are subjected to compression processing, and there are the plurality of intra-domain shift results corresponding to the third domain segment. Therefore, for each third domain segment, the computer device performs addition processing on the segmented compression results in the third domain segment to generate the first sum result and the second sum result of the third domain segment.

After determining the first sum result and the second sum result of each domain segment except for the first domain segment, the computer device inputs the first sum result and the second sum result of each domain segment into the selector respectively, and the selector determines whether the output result is the first sum result or the second sum result. In order to improve efficiency, the computer device sequentially determines the selection results of the domain segment at the least significant bit, the domain segment at the second least significant bit, the domain segment at the most significant bit starting from the domain segment at the least significant bit according to the bit field height of the domain segment. The selection result corresponding to the domain segment at the least significant bit is the original intra-domain shift result in the domain segment. Due to the fact that the domain segment at the least significant bit does not undergone compression and addition processing, there is no carry, so the selection result of the domain segment at the second least significant bit is the first sum result. For each third domain segment, the selection result of the domain segment at the higher bit needs to consider whether there is the carry in the domain segment at the lower bit in adjacent domain segments. When there is the carry in the domain segment at the lower bit, the selector outputs the selection result of the domain segment at the higher bit as the second sum result. On the contrary, the selector outputs the selection result of the domain segment at the higher bit as the first sum result.

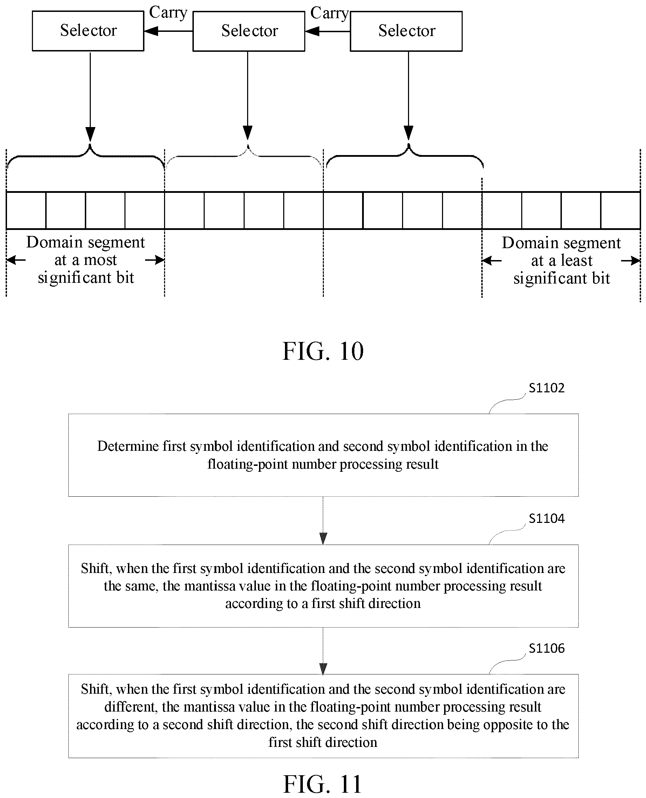

Exemplarily, as shown in FIG. 10, for the domain segment at the most significant bit, the computer device inputs the carry case through the selector of the domain segment at the second most significant bit, and the selector of the domain segment at the most significant bit outputs the first sum result or the second sum result. Similarly, for the domain segment at the second most significant bit, the computer device also performs the above processing. For the domain segment at the second least significant bit, since there is no carry in the domain segment at the least significant bit, the selector of the domain segment at the second least significant bit outputs the first sum result. For the domain segment at the least significant bit, it is directly the original intra-domain shift result as there is no need for compression and addition processing.

As a result, the computer device outputs the selection results corresponding to all the domain segments through the selector.

In this embodiment, by adopting a segmented addition strategy, different adders are allocated to different domain segments for segmented addition processing, and the plurality of selectors are used to perform carry propagate according to the carry situation of each domain segment. Compared to an addition using a full bit width for carry propagate in the related art, hardware resources needing to be occupied are reduced, a length of a critical path is effectively reduced, and timing characteristics are good.

Then, the computer device concatenates the selection results under each domain segment to obtain the complete floating-point number processing result under the first preset range. For this purpose, in some embodiments, the determining the floating-point number processing result corresponding to the target task based on the selection result of each domain segment includes: concatenating the selection result of the first domain segment, and the first sum result and the second sum result of other domain segments, according to an ordering of bit fields of the plurality of domain segments, to obtain the floating-point number processing result. Specifically, the computer device sequentially concatenates the selection results under the adjacent two domain segments one by one from high to low (or from low to high) according to the bit field height of each domain segment, so as to obtain the floating-point number processing result under the whole first preset range.

In this embodiment, since the strategies of segmented compression and segmented addition are adopted, the obtained results of all the domain segments are concatenated again to obtain the complete floating-point number processing result. This mode does not need the use of the full-bit-width compressor and adder, which reduces the length of the critical path and has good timing characteristics.

The floating-point number is high in effective precision, and is more suitable for scientific computing and engineering computing. In a scientific notation, if the expression of the floating-point number is not clearly specified, coded representation of one floating-point number in the computer will not be unique, which is not conducive to computer recognition and processing. For example, decimal numbers may be represented as 1.11 × 10⁰, 0.111× 10¹, 0.0111×10² and other various representations. Since the normalized floating-point number has the unique representation, it is necessary to normalize the floating-point number in floating point operations.

In order to ensure that the obtained floating-point number processing result conforms to the normalized floating-point number standard, after the floating-point number processing result is obtained, in some embodiments, the computer device further performs normalization processing on the floating-point number processing result, so that the floating-point number processing result conforms to a preset floating-point number standard. By performing normalization processing on the floating-point number processing result to ensure that the obtained floating-point number processing result conforms to the normalized floating-point number standard, the computer does not need to recognize and convert all the floating-point number processing results during processing, the processing efficiency is higher, and a problem of inaccurate computing caused by the non-unique coded representation of the floating-point number is avoided.

Normalization processing, also known as formatted output, refers to converting one floating-point number according to a specified format. An absolute value of mantissa M of the floating-point number processing result after normalization processing is to meet 1/r ≤ | M |<1, where r is a cardinal number, and r is usually 2 or 8 or 16.

Normalization processing refers to that a non-zero floating-point number is guaranteed to be a valid value at the most significant bit of the mantissa value by adjusting the magnitude of the mantissa value and exponential value of a non-normalized floating-point number. In some embodiments, as shown in FIG. 11, the performing normalization processing on the floating-point number processing result includes:
Step S1102: Determine first symbol identification and second symbol identification in the floating-point number processing result;
Step S1104: Shift, when the first symbol identification and the second symbol identification are the same, the mantissa value in the floating-point number processing result according to a first shift direction; and
Step S1106: Shift, when the first symbol identification and the second symbol identification are different, the mantissa value in the floating-point number processing result according to a second shift direction, the second shift direction being opposite to the first shift direction.

Normalization processing of the floating-point number includes to modes: left normalization and right normalization. The left normalization refers to performing normalization processing when the result of floating-point number operation is denormalized, shifting the mantissa value to the left by one bit, and subtracting the level code by 1 (when the cardinal number r=2); and the left normalization may be performed for multiple times. Right normalization refers to shifting the mantissa value to the right by one bit, and adding the level code by 1 (when the cardinal number r=2) when the mantissa value overflows in the result of the floating-point number operation. The right normalization only needs to be performed once.

Specifically, the computer device acquires the first symbol identification and the second symbol identification in the floating-point number processing result. In the case where the first symbol identification and the second symbol identification are the same (i.e. the first symbol identification and the second symbol identification constitute 00 or 11), shift processing is performed on the mantissa value in the floating-point number processing result according to the first shift direction. In the case where the first symbol identification and the second symbol identification are different (i.e. the first symbol identification and the second symbol identification constitute 01 or 10), shift processing is performed on the mantissa value in the floating-point number processing result according to the second shift direction. The second shift direction is opposite to the first shift direction. Taking the normalization mode of the floating-point number under the IEEE 754 standard as an example, the first shift direction is left shift, and the second shift direction is right shift.

Exemplarily, when the computer device judges that the two pieces of symbol identifications are the same, it indicates that there is no overflow. However, a highest numeric value bit of the floating-point number processing result is the same as the symbol identification, so the left normalization processing is required at this time, that is, the mantissa value is shifted to the left until the highest numeric value bit is different from a numeric value of the symbol identification. Exemplarily, for the floating-point number processing result of the following two cases: 111××× and 000×××, a result of shifting 111××× to the left by one bit is 11×××0; and a result of shifting 000××× to the left by one bit is 00×××0, and finally, the number of shifting is subtracted from the exponential value.

When the computer devices judges that the two pieces of symbol identifications are different, it indicates that the operation result overflows. At this time, it needs to perform right normalization processing, that is, the mantissa of the floating-point number processing result is shifted to the right, and shifting is stopped until there is no overflow; and then the exponential value is added by the number of shifting. Exemplarily, for the floating-point number processing result of the following two cases: 01×××× and 10××××, a result of shifting 01××× to the right by one bit is 001×××; and a result of shifting 10×××× to the right by one bit is 110×××, and finally, the exponential value is added by 1.

In this embodiment, by performing normalization processing on the floating-point number processing result, the effective bits of the mantissa value are fully utilized, and the precision of the floating-point number operation is improved.

In some embodiments, after performing normalization processing on the floating-point number, some values may be increased to the lower bit of the mantissa part. These added values need to be subjected to rounding processing. For example, 1.2349999 is rounded down to 1.23, or 1.2350001 is rounded up to 1.24. The IEEE 754 standard specifies the following several rounding modes: rounding to the nearest even number, rounding up, rounding down, and rounding towards 0. Certainly, it is not limited to this. Different floating-point number standards may be formulated with different rounding modes. In practical applications, appropriate rounding modes may be selected according to needs.

This disclosure further provides an application scenario, applying the above multiple-input floating-point number processing method. In some embodiments, the application of the multiple-input floating-point number processing method in the application scenario is, for example, processing a target task, where the target task is one of subtasks in a neural network processing task, and the neural network processing task at least includes one of a convolutional processing task or a similarity processing task. Under the application scenario, the above multiple-input floating-point number processing method further includes: executing a subtask subsequent to the target task based on the floating-point number processing result to obtain a neural network processing result.

Specifically, in a process of training and applying a neural network, for example, it is necessary to perform computational processing on image data, audio data, and text data. The image data, audio data, and text data processed by the neural network are usually represented by the floating-point numbers in the computer. For example, each pixel in an image is represented by a 32-bit single-precision floating-point number between 0 and 255, where 255 represents white and 0 represents black. For another example, the read audio data are the floating-point number within a sampling range.

In the neural network processing task, there are the plurality of subtasks involving the processing of the floating-point number. For example, convolution or deconvolution operation is performed on the inputted image data. Taking the convolution operation as an example, convolution is a result of summation after two data multiply within a certain range. In the convolution process, the computer device may use the processor to execute the above multiple-input floating-point number processing method, so as to realize the summation of the plurality of floating-point numbers, and obtain the floating-point number processing result. Then, the subsequent convolution operation is completed based on the floating-point number processing result. Therefore, in the neural network processing task, the computer device may execute each subsequent subtask in the neural network processing task based on the floating-point number processing result to obtain the neural network processing result, such as outputting the processed image data.

For another example, the above multiple-input floating-point number processing method may further be used for the similarity processing task in the neural network processing task. Taking the image data as an example, in the similarity processing task, it is necessary to compare the processed image data with the preset standard image data to calculate the similarity between the two. In the process of calculating the similarity, the computer device may use the above multiple-input floating-point number processing method to calculate the difference of the floating-point number corresponding to the image data, so as to obtain the floating-point number processing result. According to the obtained floating-point number processing result, the computer device may continue to execute the subsequent sub tasks in the neural network processing task accordingly, for example, the image data are classified according to the difference value indicated by the floating-point number processing result, and finally the neural network processing result (such as an image classification result) is outputted.

Certainly, it is not limited to this. It is clear to a person in the art that, without departing from the inventive concept and idea disclosed in this disclosure, any computational processing task applicable to the plurality of floating-point numbers may be taken as the above target task, such as a data computing task in a cloud computing scenario, or a computing task in a data processing process executed by an intelligent sensor (such as an edge sensor).

In this embodiment, by applying the above multiple-input floating-point number processing method to the tasks such as neural network processing, high-precision floating-point number processing of the neural network can be realized, and the computing performance of the neural network is improved.

In order to explain the invention idea of this disclosure as clearly as possible, an example of specifically executing the addition calculation of the plurality of floating-point numbers is used here for illustration, and the differences and advantages from a conventional mode are illustrated in detail.

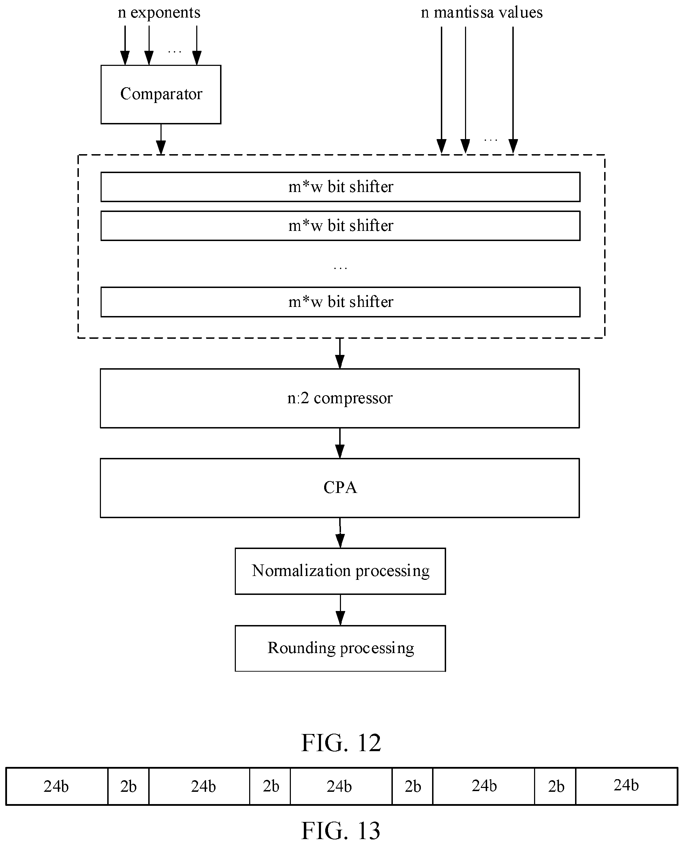

In a specific example, the flow of the conventional floating-point number processing mode is shown in FIG. 12. The computer device first acquires the exponents of n floating-point numbers, and obtains the maximum exponential value by comparison with a comparator; and meanwhile, the computer device acquires the mantissa values (mantissa) of n floating-point numbers. Then, for one floating-point number, the computer devices inputs the difference value between the exponential value and the maximum exponential value of the floating-point number, as well as the mantissa value of the floating-point number, into a fixed-size shifter to shift the floating-point number with the shifter. For other floating-point numbers, the computer device performs the same processing. Since the mantissa value of each floating-point number varies from large to small, in order to ensure that there is no intermediate precision loss, the range of the shifter used needs to be the maximum value m*w bits, and m is the quantity of the floating-point numbers minus 1.

In the shift process, in order to achieve the objective of no intermediate precision loss, the data bit width after shifting will be very large. Taking five 32-bit single-precision floating-point numbers as an example, the data bit width after shifting needs to reach 128 bits to ensure that there is no intermediate precision loss (the specific composition of 128 bits is shown in FIG. 13, where the mantissa of each floating-point number after expansion are 24 bits, and 2 bits are reserved as carry propagate bits). The oversize shift range causes significant hardware overhead and poor timing, making it difficult for the processor in the computer to achieve a high master frequency.

Similarly, after shifting is completed, the computer device inputs the obtained shift result into the n:2 compressor for compression (where n is the number of inputs of a multiple-input floating-point adder), to obtain two outputs: carry and sum, and then performs carry propagate addition on carry and sum. The final addition result is sent to a normalize unit to complete a standardization operation of the floating-point numbers. Finally, the standardized data are subjected to rounding operation to finally obtain the addition result of the floating-point numbers. The compressor uses n:2 compression for the full bit width. Taking five 32-bit single-precision floating-point numbers as an example, the compressor uses a 128-bit 5:2 compressor, which has a huge area overhead. In a subsequent addition stage, the carry propagate addition is also performed on 2 inputs (carry and sum) of the full bit width. Similarly, taking five 32-bit single-precision floating-point numbers as an example, one 128-bit adder is required, and the timing is poor.

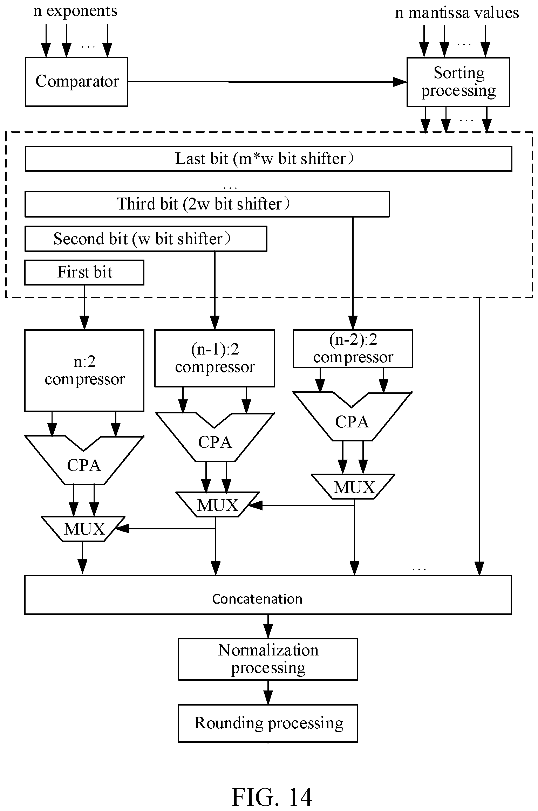

Compared with a conventional mode, as shown in FIG. 14, a whole processing flow of the multiple-input floating-point number processing method provided in this embodiment of this disclosure mainly includes: first acquiring, by a computer device, exponents of n floating-point numbers, and obtaining a maximum exponential value by comparison with a comparator; and meanwhile, acquiring, by the computer device, mantissa values (mantissa) of n floating-point numbers. Before being inputted to a shifter for shift processing, the computer device performs sorting processing on all the floating-point numbers according to magnitude of the exponential values of all the floating-point numbers. That is, for a floating-point number with a maximum exponent, no shift operation is required; for a floating-point number sorting the second bit, only w bits need to be shifted; and for a floating-point number sorting the third bit, only 2*w bits need to be shifted, and so on. For a floating-point number with a minimum exponent (sorting the last bit), the shift range is m*w. Taking five 32-bit single-precision floating-point numbers as an example, m=4, and w=26. According to a sorting result, the computer device dynamically allocates the shifter of each floating-point number, instead of using the same fixed-size shifter for each floating-point number. Compared with the related art, the area overhead of the shifter is greatly reduced.

Then, the computer device inputs the mantissa value of each floating-point number into the corresponding shifter for shift processing. The obtained shift results are then inputted into the corresponding compressors respectively. Specifically, the computer device sets compressors with different compression ratios for each domain segment. That is, for the highest w bits, an n:2 compressor is used; and for a second highest w bits, a (n-1):2 compressor is used, and so on. For the lowest w bits and the second lowest w bits, there is no need to compress through the compressor. Therefore, there is no need to allocate the compressor as well. Compared with the related art, the area overhead of the compressor is greatly reduced.

Then, for each domain segment, the computer device uses a CPA for an addition operation. For the lowest w bits, there is no need to perform the addition operation, and the shift result of the w bits is directly acquired. For the second lowest w bits, since the shift result of two floating-point numbers (corresponding to the intra-domain shift result in the aforementioned embodiment) exists in the domain segment, the computer device uses one CPA to perform the addition operation. Because there is no carry in the last w bits (the least significant bit) of the w bits (the second least significant bit), the w bits outputs the actual summation result. For other domain segments, according to whether the next domain segment (an adjacent low-bit domain segment) in the domain segment has a carry, MUX (a selector) selects whether to output the actual summation result (corresponding to the first sum result in the aforementioned embodiment) or a summation result containing the carry (i.e. the second sum result in the aforementioned embodiment), thus obtaining a plurality of selection results.

Finally, the computer device concatenates all the selection results to obtain the final addition result. Then post-processing is performed, normalization processing is performed on the addition result to make it conform to a format specified in IEEE 754, and then rounding operation is performed to obtain the final result.

Compared to a conventional mode, on the one hand, the idea of effective shift is introduced to effectively shift the sorted mantissa. The shift range of the mantissa sorting top is small (or even there is no need to shift), greatly reducing the area overhead of the shifter. On the other hand, based on the idea of effective shift introduced, domain segments are divided for the full bit width and segmented compression is performed, the compressor at the low-bit domain segment has less inputs (or even there is no need for compression), greatly reducing the area of the compressor and reducing the timing path. In the final addition stage, the strategy of segmented addition is adopted, effectively reducing a length of a critical path. Thus, lossless multiple-input floating-point number processing can be realized with the minimum hardware area, which can significantly reduce the area of the entire processor and effectively improve a core frequency of the processor.

Taking five 32-bit single-precision floating-point numbers as an example, and taking a Global Foundries (GF) 12nm process technology as an area estimation standard, the comparison between the shifter resources required by the present disclosure and the related art is shown in Table 1 below:

**Table 1**

| Shifter resources used in the related art | Shifter area used in the related art (um²) | Shifter resources used in the present disclosure | Shifter area used in the present disclosure (um²) |
|---|---|---|---|
| 5 128-bit shifters | 800 | 1 50-bit shifter | 62.5 |
| / | / | 1 76-bit shifter | 95 |
| / | / | 1 102-bit shifter | 127.5 |
| / | / | 1 128-bit shifter | 160 |
| Total | 800 | / | 445 |

It can be seen that the shifter resources used in the present disclosure are only 55.6% of the related art, greatly saving the area overhead of the shifter.

In a compression stage, the comparison between compressor resources used in the present disclosure and compressor resources used in the related art is shown in Table 2 below:

**Table 2**

| Compressor resources used in the related art | Compressor area used in the related art (um²) | Compressor resources used in the present disclosure | Compressor area used in the present disclosure |
|---|---|---|---|
| | | | (um²) |
| 1 128-bit 5:2 compressor | 192 | 1 24-bit 5:2 compressor | 36 |
| / | // | 1 26-bit 4:2 compressor | 26 |
| | / | 1 26-bit 3:2 compressor | 13 |
| Total | 192 | / | 75 |

It can be seen that the compressor resources used in the present disclosure are 39% of the related art, greatly saving the area overhead of the compressor.

In addition, in terms of timing, the critical path from shift processing to adder output in the related art is: 128-bit shift (shifter) ->5:2 compressor ->128-bit adder. The critical path from shift processing to adder output in the present disclosure is: 128-bit shift (shifter) ->5:2 compressor ->24-bit adder. The length of the critical path is effectively reduced, and a higher processor master frequency may be realized.

It is to be understood that, although the steps are displayed sequentially according to the instructions of the arrows in the flowcharts involved by all the embodiments above, these steps are not necessarily performed sequentially according to the sequence instructed by the arrows. Unless otherwise explicitly specified in this specification, execution of the steps is not strictly limited, and the steps may be performed in other sequences. Moreover, at least some of the steps in the flowcharts involved by all the embodiments above may include a plurality of steps or a plurality of stages. The steps or stages are not necessarily performed at the same moment but may be performed at different moments. Execution of the steps or stages is not necessarily sequentially performed, but may be performed alternately with other steps or at least some of sub-steps or stages of other steps.

Based on the same invention concept, an embodiment of this disclosure further provides a multiple-input floating-point number processing apparatus used for implementing the multiple-input floating-point number processing method involved above. The implementation solution provided by the apparatus to solve the problem is similar to the implementation solution recorded in the above method. Therefore, the specific limitations in one or more embodiments of the multiple-input floating-point number processing apparatus provided below may be referred to the limitations on the multiple-input floating-point number processing method above.

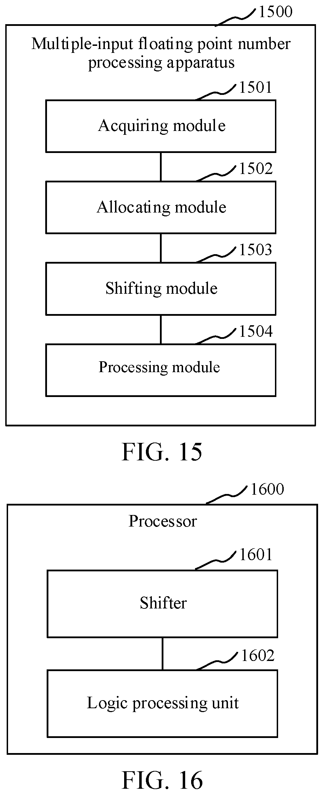

In some embodiments, as shown in FIG. 15, a multiple-input floating-point number processing apparatus 1500 is provided. The apparatus may adopt a software module or a hardware module, or a combination of the two to become a part of a computer device. The apparatus specifically includes: an acquiring module 1501, an allocating module 1502, a shifting module 1503, and a processing module 1504.

The acquiring module 1501 is configured to acquire a plurality of floating-point numbers corresponding to a target task, each of the plurality of the floating-point numbers comprising an exponent part and a mantissa part; for each of the floating-point numbers, extract an exponential value of the respective exponent part and a mantissa value of the respective mantissa part.

The allocating module 1502 is configured to sort, according to a magnitude of the exponential value of each of the plurality of floating-point numbers, the plurality of floating-point numbers to obtain a sorting result; for the each floating-point number, allocate, based on the sorting result, a shifter from a plurality of shifters with different preset numbers of bits.

The shifting module 1503 is configured to for the each floating-point number, shift the mantissa value of the respective floating-point number through the allocated shifter to obtain a shift result.

The processing module 1504 is configured to process, based on the shift result of the each of the plurality of the floating-point numbers, the plurality of floating-point numbers to obtain a floating-point number processing result corresponding to the target task.

In some embodiments, the different preset numbers of bits of the plurality of shifters are within a first preset range, and the preset numbers of bits of the plurality of shifters are uniformly distributed within the first preset range.

In some embodiments, a quantity of the plurality of shifters is equal to a quantity of the plurality of floating-point numbers. The allocating module is further configured to determine a sorting serial number of the respective floating-point number in the sorting result; determine a preset number of bits corresponding to the sorting serial number; allocate a shifter to a floating-point number specified by the sorting serial number according to the determined preset number of bits.

In some embodiments, the shifting module is further configured to for the each floating-point number, determine, based on a difference between the exponential value of the respective floating-point number and a maximum exponential value, a number of shift bits corresponding to the mantissa value of the respective floating-point number, the maximum exponential value being a maximum value of the exponential values of the plurality of floating-point numbers; and shift, based on the number of shift bits, the mantissa value of the respective floating-point number through the allocated shifter, to obtain the shift result.

In some embodiments, the shifting module is further configured to for the each floating-point number, determine, whether the number of shift bits is located within a shift range, the shift range matching a preset number of bits of the allocated shifter; shift, when the number of shift bits is located within the shift range, through the allocated shifter, each mantissa bit in the mantissa value by the number of shift bits towards a same shift direction within the shift range, the shift direction comprising left shift or right shift; shift, when the number of shift bits is located outside the shift range, each mantissa bit in the mantissa value by the preset number of bits towards a same shift direction through the allocated shifter; and take the shifted mantissa value as the shift result of the respective floating-point number.

In some embodiments, the processing module further includes a compression unit. The compression unit is configured to divide a first preset range where the different preset numbers of bits are located to obtain a plurality of domain segments, and determine compressors respectively corresponding to the plurality of domain segments, different compressors having different preset compression ratios; for each of the plurality of domain segments, determine, a plurality of intra-domain shift results within the respective domain segment, a single intra-domain shift result being an intra-domain part in the shift result corresponding to a single floating-point number; for each compressor, compress, through the respective compressor, the plurality of intra-domain shift results in a domain segment corresponding to the respective compressor, to obtain a segmented compression result of the respective domain segment; and determine the floating-point number processing result corresponding to the target task based on a plurality of segmented compression results.

In some embodiments, the different preset compression ratios are within a second preset range, and the preset compression ratios are uniformly distributed within the second preset range.

In some embodiments, the compression unit is further configured to take the plurality of intra-domain shift results as inputs of the respective compressor; and compress, by the respective compressor, the inputs based on a preset compression ratio of the respective compressor, to obtain a sum result and a carry result, the sum result being a sum of the compressed intra-domain shift results, and the carry result being a carry value of the sum.

In some embodiments, the processing module further includes an addition unit. The addition unit is configured to take, for a first domain segment that is not compressed and only has a single intra-domain shift result among the plurality of domain segments, the single intra-domain shift result as a selection result of the first domain segment; generate, for a second domain segment that is not compressed and has more than one intra-domain shift result among the plurality of domain segments, a first sum result and a second sum result of the second domain segment based on the more than one intra-domain shift result; generate, for a third domain segment that is compressed, a first sum result and a second sum result based on a segmented compression result corresponding to the third domain segment; determine the floating-point number processing result corresponding to the target task based on the selection result of the first domain segment, and the first sum result and the second sum result of other domain segments.

In some embodiments, the processing module further includes a concatenating unit. The concatenating unit is configured to concatenate the selection result of the first domain segment, and the first sum result and the second sum result of other domain segments, according to an ordering of bit fields of the plurality of domain segments, to obtain the floating-point number processing result.

In some embodiments, the above apparatus further includes a post-processing module. The post-processing module is configured to normalize the floating-point number processing result to conform to a preset floating-point number standard.

In some embodiments, the post-processing module is further configured to determine first symbol identification and second symbol identification in the floating-point number; perform, when the first symbol identification and the second symbol identification are the same, shift processing on the mantissa value in the floating-point number processing result according to a first shift direction; and perform, when the first symbol identification and the second symbol identification are different, shift processing on the mantissa value in the floating-point number processing result according to a second shift direction, the second shift direction being opposite to the first shift direction.

In some embodiments, the target task is one of subtasks in a neural network processing task, the neural network processing task at least includes one of a convolutional processing task or a similarity processing task. The above apparatus further includes a task module. The task module is configured to execute a subtask subsequent to the target task based on the floating-point number processing result to obtain a neural network processing result.

The specific limitations about the multiple-input floating-point number processing apparatus may refer to the limitations on the multiple-input floating-point number processing method above. Each module in the above multiple-input floating-point number processing apparatus may be implemented entirely or partially through software, hardware, or a combination thereof. All the above modules may be embedded in or independent of a processor in a computer device in a hardware form, or stored in a memory in the computer device in a software form for the processor to call and execute the operations corresponding to all the above modules.

Based on the same invention concept and idea, an embodiment of this disclosure further provides a processor, used for implementing the multiple-input floating-point number processing method involved in the embodiments above. In some embodiments, as shown in FIG. 16, the processor 1600 includes a plurality of shifters 1601 with different preset numbers of bits and a logic processing unit 1602. In different implementation scenarios, the processor may present various encapsulation structures according to the requirements applied to different computer devices.

For the plurality of shifters 1601 with different preset numbers of bits, a shifter being allocated to each of a plurality of floating-point numbers, based on a sorting result, for shifting a mantissa value of the respective floating-point number through to obtain a shift result, the plurality of floating-point numbers being sorted according to a magnitude of an exponential value of each of the plurality of floating-point numbers to obtain the sorting result;.

The logic processing unit 1602 is configured to process, based on the shift result of the each of the plurality of the floating-point numbers, the plurality of floating-point numbers to obtain a floating-point number processing result corresponding to the target task.

In some embodiments, the different preset numbers of bits of the plurality of shifters are within a first preset range, and the preset numbers of bits of the plurality of shifters are uniformly distributed within the first preset range.

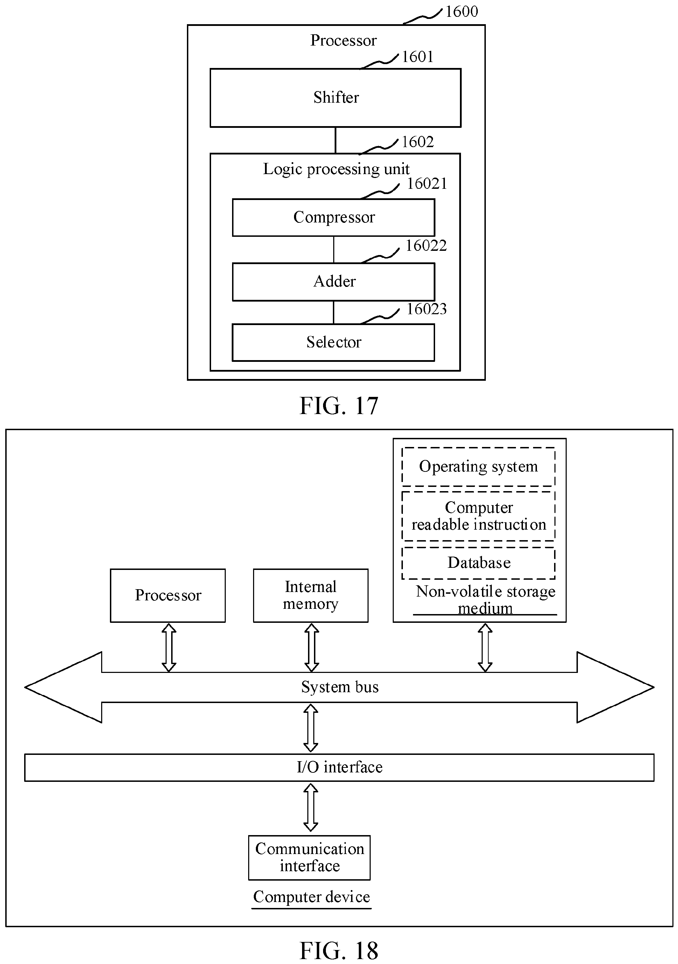

In some embodiments, as shown in FIG. 17, the logic processing unit 1602 includes:
a plurality of compressors 16021 with different preset compression ratios, connected to the plurality of shifters respectively, a compressor being allocated to each of a plurality of domain segments for compressing a plurality of intra-domain shift results in the respective domain segment, to obtain a segmented compression result of the respective domain segment;
a plurality of adders 16022, connected to the plurality of compressors 16021 respectively, and configured to generate first sum results and second sum results of the plurality of domain segments based on the segmented compression result; and
a plurality of selectors 16023, connected to the plurality of adders 16022 respectively, and configured to determine a selection result of each domain segment based on the first sum results and the second sum results of the plurality of domain segments, the selection results being concatenated to generate the floating-point number processing result.

In some embodiments, the different preset compression ratios are within a second preset range, and the preset compression ratios are uniformly distributed within the second preset range.

The specific limitations about the processor may refer to the limitations on the multiple-input floating-point number processing method above. All components in the above processor may be fully or partially implemented through combinations of other circuit components such as a gate circuit, and a switch circuit. All the above components may be integrated in the processor of the computer device, for the processor to call and execute operations corresponding to all the above components.

In some embodiments, a computer device is provided. The computer device may be a server or a terminal containing the above processor. The server may be an independent physical server, or a server cluster or distributed system composed of the plurality of physical servers, or a cloud server that provides a cloud computing service. The terminal may be a smartphone, a tablet computer, a notebook computer, a desktop computer, a smart speaker, a smartwatch, a vehicle-mounted terminal, a smart television, and the like. An internal structure diagram of the computer device may be shown in FIG. 18. The computer device includes a processor, a memory, and a network interface that are connected through a system bus. The processor of the computer device is configured to provide computing and control capabilities. The memory of the computer device includes a non-transitory storage medium and an internal memory. The non-transitory storage medium stores an operating system, a computer readable instruction and a database. The internal memory provides an environment for running of the operating system and the computer readable instruction in the non-transitory storage medium. The database of the computer device is used for storing floating-point numbers. The network interface of the computer device is used for communicating with an external terminal through a network connection. The computer readable instruction, when executed by the processor, implements a multiple-input floating-point number processing method.

A person skilled in the art may understand that, the structure shown in FIG. 18 is merely a block diagram of a partial structure related to a solution in this disclosure, and does not constitute a limitation to the computer device to which the solution in this disclosure is applied. Specifically, the computer device may include more components or fewer components than those shown in the figure, or may combine some components, or may have a different component deployment.

In some embodiments, a computer device is further provided, including a memory and a processor. The memory stores a computer readable instruction, and the processor, when executing the computer readable instruction, implements the steps in the method embodiments above.

In some embodiments, a computer readable storage medium is provided, storing a computer program. The computer program, when executed by a processor, implements the steps in the method embodiments above.

In an embodiment, a computer program product is provided, including a computer program. The computer program, when executed by a processor, implements the steps in the method embodiments above.

A person of ordinary skill in the art may understand that all or some of flows in the methods of the above embodiments may be implemented by instructing relevant hardware through the computer program. The computer program may be stored in a non-transitory computer readable storage medium. The computer program, when executed, may include the flows of the embodiments of the methods above. Any reference to the memory, the database, or other mediums used in the embodiments provided in this disclosure may all include at least one of a non-transitory memory or a volatile memory. The non-transitory memory may include a read-only memory (ROM), a magnetic tape, a floppy disk, a flash memory, an optical memory, a high-density embedded non-transitory memory, a resistive random access memory (ReRAM), a magnetoresistive random access memory (MRAM), a ferroelectric random access memory (FRAM), a phase change memory (PCM), a graphene memory, etc. The volatile memory may include a random access memory (RAM) or an external cache memory, etc. As illustration rather than limitation, the RAM may take various forms, such as a static random access memory (SRAM) or a dynamic random access memory (DRAM). The database involved in the embodiments provided by this disclosure may include at least one of a relational database and a non relational database. The non-relational database may include, but is not limited to, a blockchain-based distributed database, etc. The processor involved in the embodiments provided by this disclosure may be, but is not limited to, a general purpose processor, a central processing unit, a graphics processing unit, a digital signal processor, a programmable logic unit, a data processing logic unit based on quantum computing, etc.

The technical features of the above embodiments may be randomly combined. For concise description, not all possible combinations of the technical features in the above embodiments are described. However, provided that the combinations of the technical features do not conflict with each other, the combinations of the technical features are considered as falling within the scope described in this specification.

The above embodiments merely express several implementations of this disclosure. The descriptions thereof are relatively specific and detailed, but are not to be understood as limitations to the scope of the present disclosure. For a person of ordinary skill in the art, several transformations and improvements can be made without departing from the idea of this disclosure. These transformations and improvements belong to the protection scope of this disclosure. Therefore, the protection scope of the patent of this disclosure shall be subject to the appended claims.

## Claims

1. A multiple-input floating-point number processing method, executable by a computer device, and comprising:
acquiring a plurality of floating-point numbers corresponding to a target task, each of the plurality of the floating-point numbers comprising an exponent part and a mantissa part;
for each of the floating-point numbers, extracting an exponential value of the respective exponent part and a mantissa value of the respective mantissa part;
sorting, according to a magnitude of the exponential value of each of the plurality of floating-point numbers, the plurality of floating-point numbers to obtain a sorting result;
for the each floating-point number,
allocating, based on the sorting result, a shifter from a plurality of shifters with different preset numbers of bits;
shifting the mantissa value of the respective floating-point number through the allocated shifter to obtain a shift result; and
processing, based on the shift result of the each of the plurality of the floating-point numbers, the plurality of floating-point numbers to obtain a floating-point number processing result corresponding to the target task.

2. The method according to claim 1, wherein the different preset numbers of bits of the plurality of shifters are within a first preset range, and the preset numbers of bits of the plurality of shifters are uniformly distributed within the first preset range.

3. The method according to claim 1, wherein a quantity of the plurality of shifters is equal to a quantity of the plurality of floating-point numbers, and the allocating, based on the sorting result, a shifter from a plurality of shifters with different preset numbers of bits comprises:
determining a sorting serial number of the respective floating-point number in the sorting result;
determining a preset number of bits corresponding to the sorting serial number;
allocating a shifter to a floating-point number specified by the sorting serial number according to the determined preset number of bits.

4. The method according to claim 1, wherein the shifting the mantissa value of the respective floating-point number through the allocated shifter to obtain a shift result comprises:
for the each floating-point number,
determining, based on a difference between the exponential value of the respective floating-point number and a maximum exponential value, a number of shift bits corresponding to the mantissa value of the respective floating-point number, the maximum exponential value being a maximum value of the exponential values of the plurality of floating-point numbers; and
shifting, based on the number of shift bits, the mantissa value of the respective floating-point number through the allocated shifter, to obtain the shift result.

5. The method according to claim 4, wherein the shifting, based on the number of shift bits, the mantissa value of the respective floating-point number through the allocated shifter, to obtain the shift result comprises:
for the each floating-point number,
determining, whether the number of shift bits is located within a shift range, the shift range matching a preset number of bits of the allocated shifter;
shifting, when the number of shift bits is located within the shift range, through the allocated shifter, each mantissa bit in the mantissa value by the number of shift bits towards a same shift direction within the shift range, the shift direction comprising left shift or right shift;
shifting, when the number of shift bits is located outside the shift range, each mantissa bit in the mantissa value by the preset number of bits towards a same shift direction through the allocated shifter; and
taking the shifted mantissa value as the shift result of the respective floating-point number.

6. The method according to claim 1, wherein the processing, based on the shift result of the each of the plurality of the floating-point numbers, the plurality of floating-point numbers to obtain a floating-point number processing result corresponding to the target task comprises:
dividing a first preset range where the different preset numbers of bits are located to obtain a plurality of domain segments, and determining compressors respectively corresponding to the plurality of domain segments, different compressors having different preset compression ratios;
for each of the plurality of domain segments, determining, a plurality of intra-domain shift results within the respective domain segment, a single intra-domain shift result being an intra-domain part in the shift result corresponding to a single floating-point number;
for each compressor, compressing, through the respective compressor, the plurality of intra-domain shift results in a domain segment corresponding to the respective compressor, to obtain a segmented compression result of the respective domain segment; and
determining the floating-point number processing result corresponding to the target task based on a plurality of segmented compression results.

7. The method according to claim 6, wherein the different preset compression ratios are within a second preset range, and the preset compression ratios are uniformly distributed within the second preset range.

8. The method according to claim 6, wherein the compressing, through the respective compressor, the plurality of intra-domain shift results in a domain segment corresponding to the respective compressor, to obtain a segmented compression result of the respective domain segment comprises:
taking the plurality of intra-domain shift results as inputs of the respective compressor; and
compressing, by the respective compressor, the inputs based on a preset compression ratio of the respective compressor, to obtain a sum result and a carry result, the sum result being a sum of the compressed intra-domain shift results, and the carry result being a carry value of the sum.

9. The method according to claim 6, wherein the determining the floating-point number processing result corresponding to the target task based on a plurality of segmented compression results comprises:
taking, for a first domain segment that is not compressed and only has a single intra-domain shift result among the plurality of domain segments, the single intra-domain shift result as a selection result of the first domain segment;
generating, for a second domain segment that is not compressed and has more than one intra-domain shift result among the plurality of domain segments, a first sum result and a second sum result of the second domain segment based on the more than one intra-domain shift result;
generating, for a third domain segment that is compressed, a first sum result and a second sum result based on a segmented compression result corresponding to the third domain segment;
determining the floating-point number processing result corresponding to the target task based on the selection result of the first domain segment, and the first sum result and the second sum result of other domain segments.

10. The method according to claim 9, wherein the determining the floating-point number processing result corresponding to the target task based on the selection result of the first domain segment, and the first sum result and the second sum result of other domain segments comprises:
concatenating the selection result of the first domain segment, and the first sum result and the second sum result of other domain segments, according to an ordering of bit fields of the plurality of domain segments, to obtain the floating-point number processing result.

11. The method according to claim 1, further comprising:
normalizing the floating-point number processing result to conform to a preset floating-point number standard.

12. The method according to claim 11, wherein the normalizing the floating-point number processing result to conform to a preset floating-point number standard comprises:
determining a first symbol identification and a second symbol identification in the floating-point number processing result;
shifting, when the first symbol identification and the second symbol identification are the same, the mantissa value in the floating-point number processing result according to a first shift direction; and
shifting, when the first symbol identification and the second symbol identification are different, the mantissa value in the floating-point number processing result according to a second shift direction, the second shift direction being opposite to the first shift direction.

13. The method according to any one of claims 1 to 12, wherein the target task is one of subtasks in a neural network processing task, the neural network processing task at least comprises one of a convolutional processing task or a similarity processing task, and the method further comprises:
executing a subtask subsequent to the target task based on the floating-point number processing result to obtain a neural network processing result.

14. A multiple-input floating-point number processing apparatus, comprising:
an acquiring module, configured to acquire a plurality of floating-point numbers corresponding to a target task, each of the plurality of the floating-point numbers comprising an exponent part and a mantissa part; for each of the floating-point numbers, extract an exponential value of the respective exponent part and a mantissa value of the respective mantissa part;
an allocating module, configured to sort, according to a magnitude of the exponential value of each of the plurality of floating-point numbers, the plurality of floating-point numbers to obtain a sorting result; for the each floating-point number, allocate, based on the sorting result, a shifter from a plurality of shifters with different preset numbers of bits;
a shifting module, configured to for the each floating-point number, shift the mantissa value of the respective floating-point number through the allocated shifter to obtain a shift result; and
a processing module, configured to process, based on the shift result of the each of the plurality of the floating-point numbers, the plurality of floating-point numbers to obtain a floating-point number processing result corresponding to the target task.

15. A processor, comprising:
a plurality of shifters with different preset numbers of bits, a shifter being allocated to each of a plurality of floating-point numbers, based on a sorting result, for shifting a mantissa value of the respective floating-point number through to obtain a shift result, the plurality of floating-point numbers being sorted according to a magnitude of an exponential value of each of the plurality of floating-point numbers to obtain the sorting result; and
a logic processing unit, configured to process, based on the shift result of the each of the plurality of the floating-point numbers, the plurality of floating-point numbers to obtain a floating-point number processing result corresponding to the target task.

16. The processor according to claim 15, wherein the different preset numbers of bits of the plurality of shifters are within a first preset range, and the preset numbers of bits of the plurality of shifters are uniformly distributed within the first preset range.

17. The processor according to claim 15, wherein the logic processing unit comprises:
a plurality of compressors with different preset compression ratios, connected to the plurality of shifters respectively, a compressor being allocated to each of a plurality of domain segments for compressing a plurality of intra-domain shift results in the respective domain segment, to obtain a segmented compression result of the respective domain segment;
a plurality of adders, connected to the plurality of compressors respectively, and configured to generate first sum results and second sum results of the plurality of domain segments based on the segmented compression result; and
a plurality of selectors, connected to the plurality of adders respectively, and configured to determine a selection result of each domain segment based on the first sum results and the second sum results of the plurality of domain segments, the selection results being concatenated to generate the floating-point number processing result.

18. A computer device, comprising a memory and a processor, the memory storing a computer readable instruction, and the processor, when executing the computer readable instruction, implementing operations of the method according to any one of claims 1 to 13.

19. A computer readable storage medium, storing a computer program, the computer program, when executed by a processor, implementing operations of the method according to any one of claims 1 to 13.

20. A computer program product, comprising a computer program the computer program, when executed by a processor, implementing operations of the method according to any one of claims 1 to 13.
